# EUROPÄISCHE PATENTSCHRIFT

(11) **EP 0 804 702 B1**
(45) Veröffentlichungstag und Bekanntmachung des Hinweises auf die Patenterteilung: **12.04.2000**
(21) Anmeldenummer: 96900194.0
(22) Anmeldetag: 18.01.1996
(51) Int. Cl.: F16L 55/165, F16L 55/28, B29C 63/34

(54) **EINRICHTUNG UND VERFAHREN ZUR HERSTELLUNG VON BESCHICHTUNGEN**
DEVICE AND PROCESS FOR PRODUCING COATINGS
DISPOSITIF ET PROCEDE POUR LA REALISATION DE REVETEMENTS

(30) Priorität: 19.01.1995 AT 7895
(43) Veröffentlichungstag der Anmeldung: 05.11.1997
(73) Patentinhaber: Sewer Coating Systems Verbundmaterialienentwicklungs-und Vertriebsgesellschaft Mbh, 1010 Wien (AT); Universale-Bau Aktiengesellschaft, 1131 Wien (AT)
(72) Erfinder: WEISS, Hans, Karl, A-1030 Wien (AT)
(74) Vertreter: Cunow, Gerda
(86) Internationale Anmeldenummer: AT9600005
(87) Internationale Veröffentlichungsnummer: WO9622489

(56) Entgegenhaltungen:
- EP-A- 0 115 993
- EP-A- 0 450 975
- DE-A- 3 931 775
- DE-A- 4 403 370

## Beschreibung

Die Erfindung bezieht sich auf eine Einrichtung zur Beschichtung von Innenflächen von langgestreckten Hohlräumen, wie Leitungen oder Kanälen, welche Einrichtung ein im wesentlichen dem Querschnitt des Hohlraumes entsprechendes Schild aufweist, das mittels eines mit diesem in Verbindung stehenden Fahrgestelles in Längsrichtung des Hohlraumes verfahrbar ist und das mit Zuführleitungen für eine im plastischen Zustand befindliche, erhärtende Masse in Verbindung steht, welche Zuführleitung mit über den Umfang des Querschnittes des Hohlraumes im wesentlichen gleichmäßig verteilt angeordneten Austrittsöffnungen versehen sind, wobei ein Gebläse mit einer Aufnahme für einen an den zu verkleidenden Hohlraum anpreßbaren, zur Innenseite im wesentlichen luftundurchlässigen Schlauch versehen ist und eine im Hohlraum ortsfest verankerbare Stützeinrichtung aufweist. Die Erfindung bezieht sich weiters auf ein Verfahren zur Aufbringung einer Beschichtung aus einer mit Fasern verstärkten, aushärtenden, ein Bindemittel aufweisenden Masse auf einem Untergrund, insbesondere der Innenwand eines Kanals oder dgl, unter Verwendung einer derartigen Einrichtung.

Bei derartigen bekannten Verfahren werden bei der Zubereitung einer erhärtenden Masse diese Fasern, gegebenenfalls in Form von Bündeln aus mittels eines sich in der Masse lösenden Bindemittels zusammengehaltener Fasern, beigemischt. Dabei ergibt sich jedoch das Problem, daß oft nur sehr schwer und mit erheblichem Aufwand eine ausreichend gleichmäßige Verteilung der Fasern, deren spezifisches Gewicht meist erheblich unter jenem der Masse liegt, in dieser erreichbar ist. Außerdem läßt sich auf diese Weise ein nur eher bescheidener Füllgrad der Masse mit Fasern erreichen.

Ein derartiges Verfahren ist beispielsweise aus der WO-A 93/13350 bekanntgeworden, wobei auf einen Untergrund eine Schicht aus miteinander in Eingriff stehenden Fasern aufgebracht und diese Schicht mit einer sich in einem plastisch verformbaren Zustand befindlichen Masse durchtränkt wird, wonach die Masse aushärten gelassen wird.

Es sind weiters Einrichtungen für die Beschichtung von Innenwänden von Hohlkörpern, z.B. von Kanälen, bekannt. Derartige Beispiele für eine solche Einrichtung sind beispielsweise in der DE-A 39 31 775 oder der DE-A 41 26 310 beschrieben.

Bei den bekannten Einrichtungen ist eine rohrartige Schalung vorgesehen, die in ihrer Außenseite eine gegen die Innenwand eines zu beschichtenden Kanales vorspringende, umlaufende Dichtung aufweist. In Vorschubrichtung der Einrichtung gesehen hinter dieser Dichtung sind die Ausströmöffnungen der Zuführleitungen für die erhärtende Masse angeordnet. An diesem Bereich schließt ein Bereich an, in dem ein auf der Außenseite der Schalung angebrachter, elastisch aufweitbarer Schlauch mit Druckluft aufblasbar ist, der die austretende, erhärtende Masse verteilt und grob glättet. Hinter diesem Bereich ist das Schild angeordnet, das aus aufspreizbaren Segmenten gebildet ist und zur Glättung der aufgebrachten Beschichtung dient. Das Schild stellt bei der sich in Vorschubrichtung bewegenden Einrichtung das Ende derselben dar.

Bei einer solchen Einrichtung ergibt sich der Nachteil, daß diese sehr schwer und sperrig ist. Außerdem erfordert die Einrichtung aufgrund der sehr erheblichen Reibung zwischen der Dichtung bzw. dem aufblasbaren Schlauch und nicht zuletzt dem Schild und der zu beschichtenden Innenwand des Hohlraumes einen sehr leistungsstarken Antrieb, um die Einrichtung überhaupt bewegen zu können, wobei sich auch Probleme hinsichtlich der Übertragung der Antriebskraft auf die Innenwand des Hohlraumes ergeben. Außerdem läßt sich mit den bekannten Einrichtungen nicht ohne weiteres mit Fasern stark angereicherte Beschichtungen aufbringen.

Ein Ziel der Erfindung ist es, eine Einrichtung der eingangs genannten Art vorzuschlagen, die sich für die Beschichtung von Innenwänden von Hohlkörpern, insbesondere Kanälen oder dgl. eignet und sich durch einen einfachen Aufbau auszeichnet.

Ausgehend von einer Einrichtung der eingangs genannten Art ist zur Lösung dieser Aufgabe die erfindungsgemäße Einrichtung im wesentlichen dadurch gekennzeichnet, daß das Schild mit einer für den Durchtritt des neben der undurchlässigen Schicht ein Fasermaterial aufweisenden Schlauches vorgesehenen, zentralen Öffnung versehen ist, und die Zuführleitungen mit einer am Fahrgestell gehaltenen Verteileinrichtung für die erhärtende Masse verbunden sind und in am äußeren Umfang des Schildes angeordneten Rohren enden, deren Austrittsöffnungen im wesentlichen durch einen schräg zur Längsachse der Rohre geführten Schnitt gebildet sind, die an den der Innenwand des Hohlraumes nächsten Mantellinien der Rohre enden. Durch die erfindungsgemäß vorgeschlagenen Maßnahmen ist es möglich, auf die sehr schwere, starre Schalung, wie sie im bekannten Fall vorgesehen ist, zu verzichten. Dabei kann ein mit einer außenseitig angebrachten Faserschicht versehener Schlauch auf einfache Weise verarbeitet werden. Es genügt dazu, diesen im zusammengepackten Zustand durch die Öffnung im Schild hindurchzuführen und an dem im Hohlraum ortsfest gehaltenen Gebläse anzuschließen, wobei die Öffnung so bemessen sein muß, daß der Schlauch im zusammengepackten Zustand gehalten wird und ein Einströmen von Luft in den in Vorschubrichtung der Einrichtung gesehen, vor dem Schild liegenden Bereich des Schlauches weitgehend verhindert wird.

Durch Einblasen von Luft in den in Vorschubrichtung der Einrichtung hinter dem Schild bzw. zwischen dem Schild und dem Gebläse befindlichen Teil des Schlauches bläht sich dieser auf und legt sich an die Innenwand des auszukleidenden Hohlraumes an. Dabei befinden sich die am äußeren Umfang des Schildes gehaltenen Rohre zwischen der Innenwand des Hohlraumes und der Faserschicht des Schlauches, sodaß über die Rohre die erhärtende Masse zwischen der Innenwand des Hohlraumes und der Faserschicht eingebracht werden kann.

Da die Austrittsöffnungen der Rohre im wesentlichen gegen die Faserschicht gerichtet sind, wird diese von der erhärtenden Masse durchtränkt. Dadurch gelangt die erhärtende Masse auch zwischen die Außenseite des Schlauches und die Faserschicht, sodaß diese von der erhärtenden Masse unterspült wird und sich eine dünne, faserarme Schicht ausbildet, die eine sehr glatte Oberfläche aufweist.

Die gesamte Einrichtung mit Ausnahme des ortsfest im Hohlraum gehaltenen Gebläses kann entsprechend dem Arbeitsfortschritt in Vorschubrichtung verfahren werden, wobei sich der Schlauch nach und nach aufbläht und dabei die erhärtende Masse zwischen der Innenwand des Hohlraumes und der Faserschicht des Schlauches eingebracht wird, wobei sich die erhärtende Mase mit der Innenwand verbindet und aufgrund der sehr hohen Füllung mit Fasermaterial eine hohe Festigkeit, insbesondere auch Zugfestigkeit, erreicht.

Als erhärtende Massen haben sich hydraulisch abbindende Massen, vorzugsweise auf der Basis von Weißzement mit Zusatzstoffen und Abbindebeschleunigern, bewährt. Grundsätzlich können aber auch andere erhärtende Massen, z.B. auf der Basis von Kunstharzen verwendet werden.

Bei dem Fasermaterial kann es sich, je nach den zu erwartenden Belastungen der Auskleidungsschicht, um Natur- oder Kunstfasern oder auch Metallfasern handeln. Besonders vorteilhaft ist es, als Faserschicht einen Nadelfilz zu verwenden. Ein solcher läßt sich sehr leicht handhaben und kann relativ dicht hergestellt werden, wodurch sich in besonders hoher Füllgrad der Auskleidungsschicht ergibt.

Gemäß einer bevorzugten Ausführung ist vorgesehen, daß das Schild mit mindestens zwei Schneideinrichtungen und zwei antreibbaren Wickeleinrichtungen zur Aufnahme von Streifen des Packschlauches in Verbindung steht. Dadurch ergibt sich der Vorteil, daß sich auch in einen Packschlauch gepackte Schläuche mit Faserschicht sehr leicht verarbeiten lassen, wobei auch sichergestellt ist, daß sich der Schlauch in dem in Vorschubrichtung der Einrichtung vor dem Schild befindlichen Bereich nicht aufblähen kann, da er im Packschlauch gehalten ist. Dabei ist es zweckmäßig, die Schneideinrichtung und Wickeleinrichtung möglichst nahe dem Schild anzuordnen.

Dadurch, daß das Schild bzw. dessen Fahrgestell mit mindestens zwei im Bereich einer Querschnittsebene des Hohlraumes angeordneten, zur Anlage an dem Schlauch vorgesehenen, antreibbaren Rollen oder umlaufenden Bändern in Verbindung steht, wie es einer weiteren bevorzugten Ausführungsform entspricht, ist es durch entsprechende Ansteuerung der an der Außenseite des Schlauches bzw. Packschlauches anliegenden Räder oder umlaufenden Bänder möglich, die Vorschubgeschwindigkeit der Einrichtung zu steuern. Dabei braucht über diese Räder bzw. umlaufenden Bänder keineswegs die gesamte für den Vorschub erforderliche Kraft aufgebraucht werden, wobei diese von dem Schlauch aufgenommen werden müßte. Der Hauptteil der für den Vorschub erforderlichen Kraft wird durch das ortsfest gehaltene Gebläse aufgebracht, wobei die in den Schlauch eingeblasene Luft das Schild wegdrückt. Dazu genügen je nach der Fläche des Schildes bereits relativ geringe Drücke im Inneren des aufgeblasenen Schlauches.

Bei entsprechender Druckbeaufschlagung, die sich im wesentlichen nach dem erforderlichen Anpreßdruck des Schlauches an die Innenwand des auszukleidenden Hohlraumes richtet, kann es auch vorkommen, daß der Vorschub der Einrichtung durch die an dem zusammengepackten bzw. vom Packschlauch umhüllten Schlauch anliegenden Rollen oder umlaufenden Bändern gebremst werden muß, um eine ausreichende Durchtränkung der Faserschicht mit der erhärtenden Masse sicherzustellen.

Gemäß einer weiteren bevorzugten Ausführung ist vorgesehen, daß das Schild und das Fahrgestell mehrteilig ausgebildet sind und für die Verbindung der einzelnen Teile lösbare Befestigungsmittel, vorzugsweise Schnappverschlüsse, vorgesehen sind. Dadurch ergibt sich der Vorteil, daß die Einrichtung über bei Kanälen oder dgl. ohnehin vorhandene Zugangschächte in einen Kanal eingebracht und in diesem zusammengebaut werden kann. Es erübrigen sich dabei größere Aufgrabungen und eine örtliche Zerstörung des Decken- bzw. Firstbereiches des zu sanierenden Kanals, um die Einrichtung in diesen einbringen zu können

Dadurch, daß die am äußeren Umfang des Schildes angeordneten Rohre einen im wesentlichen dreieckigen Querschnitt aufweisen und der Bereich der je einen Ausströmöffnung gegen das Innere des Hohlraumes vorragende Ränder aufweist, wobei in diesem Bereich vorzugsweise eine Verbreiterung vorgesehen ist, wie es einer weiteren bevorzugten Ausführung entspricht, wird erreicht, daß sich nur geringe Störungen des Verlaufes des äußeren Umfanges der Faserschicht des Schlauches im Bereich der Rohre ergeben und sich die austretende, erhärtende Masse über eine größere Fläche verteilen kann. Weiters führen die vorgesehenen Ränder der Rohre im Bereich ihrer Ausströmöffnungen zu einer gewissen Abdichtung gegen die Faserschicht, sodaß die austretende, erhärtende Masse, die meist relativ dünnflüssig ist, nicht entlang des Rohres gegen das Schild zu fließt, sondern in die Faserschicht eindringt und diese bis zum Schlauch durchtränkt. Diese Ränder schaffen auch einen gewissen Freiraum im Bereich der Ausströmöffnungen, sodaß diese nicht durch die Faserschicht verschlossen werden könnte. In diesem Zusammenhang ist besonders bevorzugt vorgesehen, daß die Rohre im Bereich der Ausströmöffnung an ihren der Innenwand des Hohlraumes im wesentlichen anliegenden Wandbereichen mit gegen das Innere des Hohlraumes vorspringenden und in Längsrichtung der Rohre verlaufenden Rippen versehen sind.

Gemäß einer weiteren bevorzugten Ausführung ist vorgesehen, daß in der Ausströmöffnung nahen Bereichen der Rohre an deren dem Inneren des Hohlraumes zugekehrten Seite mindestens zwei in Längsrichtung der Rohre versetzt angeordnete, an sich bekannte Sensoren zur Erfassung der erhärtenden Masse vorgesehen sind, die über Signalleitungen mit einer Steuerung verbunden sind, an der das Gebläse und bzw. oder die Antriebe der antreibbaren Rollen oder umlaufenden Bänder angeschlossen ist. Dadurch wird ermöglicht, die Ausbreitung der aus den Rohren austretenden, erhärtenden Masse zu erfassen und diese durch Steuerung der Vorschubgeschwindigkeit in einem vorbestimmten Bereich zu halten, wobei die Ausbreitung der erhärtenden Masse in Richtung zum Schild hin durch Versuche auch Hinweise auf die Durchtränkung der Faserschicht erhalten werden können. Weiters ist es durch Vergleich der Signale der Sensoren der einzelnen Rohre auch möglich, allfällige Schäden an einem der Rohre, z.B. Bruch des Randes desselben, zu erkennen.

Dadurch, daß die mit den Zuführleitungen verbundene Verteileinrichtung einen antreibbaren, zylindrischen Rotor aufweist, der einen an dessen äußerer Mantelfläche offenen, mit einer Zuleitung für die erhärtende Masse versehenen Kanal aufweist, wobei der Rotor mit nur geringem Spiel in einem diesen umgreifenden Stator umläuft, der mit einer der Anzahl der Zuführleitungen bzw. den Rohren des Schildes entsprechenden, gleichmäßig über seinen Umfang verteilt angeordneten und seine Wand durchsetzenden Kanälen versehen ist, die mit den Zuführleitungen verbindbar sind und an ihren dem Rotor zugekehrten Einlässen im Bewegungsweg der statorseitigen öffnung des Kanals des Rotors liegen, wie es einer weiteren beovrzugten Ausführung entspricht, wird ermöglicht, daß die Rohre in einer bestimmten Reihenfolge nacheinander mit gleichen Portionen erhärtender Masse versorgt werden. Dadurch ist ein über den Umfang des Querschnittes des auszukleidenden Hohlraumes im wesentlichen gleichmäßiger Austritt der erhärtenden Masse sichergestellt und der Einfluß des hydrostatischen Druckes bei einer erheblichen Erstreckung des Querschnittes des Hohlraumes, z.B. eines Kanals, in vertikaler Richtung weitestgehend eliminiert. Dabei ergibt sich durch die vorgeschlagene Lösung auch der Vorteil eines sehr kompakten Aufbaus und einer einfachen Konstruktion.

Grundsätzlich ließe sich ein gleichmäßiger Austritt der erhärtenden Masse über den Umfang des Querschnittes des Hohlraumes auch mittels einer entsprechenden Anzahl von Peristaltikpumpen erzielen, doch ergeben sich bei einer solchen Lösung erhebliche Platzprobleme und auch ein wesentlich erhöhter Energiebedarf für den Antrieb der Pumpen.

Dadurch, daß bevorzugt die Achse des Kanals im Rotor und die Achsen der Kanäle im Stator auf einer gemeinsamen, imaginären Kegelmantelfläche liegen, werden scharfe Richtungsänderungen des Stromes der erhärtenen Masse vermieden, in denen es aufgrund von Wirbelbildungen zu Ablagerungen von Bestandteilen der erhärtenden Masse kommen könnte. Die Vermeidung von scharfen Richtungsänderungen ist besonders bei erhärtenden Massen zweckmäßig, die Feinstteile als Zuschlagsstoffe enthalten.

Dadurch, daß bevorzugt der im Rotor angeordnete Kanal an seiner der Drehachse zugekehrten Innenwand mit einem abgebogenen Rohr verbunden ist, dessen einer Schenkel koaxial zur Drehachse des Rotors in einem Anschlußgehäuse gelagert ist, an das ein die erhärtende Masse führender Schlauch axial angeschlossen ist, ergibt sich eine sehr einfache Konstruktion einer Verteileinrichtung.

Um insbesondere beim Start der Einrichtung Unterschiede beim Austritt der erhärtenden Masse zu vermeiden, ist es vorteilhaft, daß alle Zuführleitungen zwischen der Verteileinrichtung und den am äußeren Rand des Schildes angeordneten Rohren gleiche Länge aufweisen.

Ein weiteres Ziel der Erfindung ist es, die obengenannten Nachteile bekannter Verfahren zu vermeiden und ein Verfahren der eingangs erwähnten Art unter Verwendung einer erfindungsgemäßen Einrichtung vorzuschlagen, das sich einfach durchführen läßt und mit dem auch ein sehr hoher Füllgrad der erhärtenden Masse mit Fasern erzielbar ist. Zur Lösung dieser Aufgabe ist das Verfahren der eingangs erwähnten Art im wesentlichen dadurch gekennzeichnet, daß durch ein verfahrbares Schild auf den Untergrund eine Schicht aus miteinander in Eingriff stehenden, vorzugweise einen Nadelfilz bildenden, Fasern aufgebracht und diese Schicht mit der sich in einem plastisch verformbaren Zustand befindlichen Masse durchtränkt wird, welche über den Umfang des zu beschichtenden Untergrundes verteilt über Austrittsöffnungen ausgebracht wird, wonach die Masse aushärten gelassen wird. Durch die erfindungsgemäß vorgeschlagenen Maßnahmen ist es möglich, Beschichtungen herzustellen, die einen sehr hohen Anteil an Fasern aufweisen, wobei diese auch sehr gleichmäßig in der erhärteten Masse verteilt sind. Dadurch läßt sich z.B. bei hydraulisch abbindenden Massen eine sehr hohe Festigkeit erreichen.

Dabei können verschiedene Fasern, vorzugsweise jedoch Polypropylenfasern, verwendet werden, die z.B. in Form eines Wirrvlieses, vorzugsweise jedoch in Form eines Nadelfilzes, verwendet werden. Durch den Zusammenhalt der einzelnen Fasern untereinander ist bei der Durchtränkung mit der Masse, die sich vorzugsweise in einem eher dünnflüssigen Zustand befindet, sichergestellt, daß sich in der Masse nach deren Erhärtung eine sehr gleichmäßige Verteilung der Fasern ergibt und sich die so hergestellte Beschichtung durch sehr gute mechanische Eigenschaften, wie eine hohe Zugfestigkeit, ergibt.

Außerdem ist es bei entsprechender Halterung der Faserschicht auch möglich, diese mit der eher dünnflüssigen, erhärtenden Masse zu überschwemmen, wodurch eine dünne, im wesentlichen faserfreie Schicht erhalten werden kann, die sich nach dem Erhärten durch eine glatte, dichte Oberfläche auszeichnet.

Die erfindungsgemäß vorgesehene Armierung, die durch die Faserschicht gebildet ist, kann eine Schicht aus erhärtender Masse auch auf Krümmungen mit kleinen Radien problemlos aufgebracht werden.

Dabei kann die Masse im wesentlichen beliebig zusammengesetzt sein, doch ist es vorteilhaft, eine Masse mit einem hydraulischen Bindemittel, z.B. Weißzement, vorzusehen, wobei der Masse Flugasche, Mikrosilikate, Verflüssiger und Abbindebeschleuniger, wie z.B. Aluminiumoxid, zugesetzt werden können.

Gemäß einer bevorzugten Ausführungsform ist vorgesehen, daß die Schicht aus miteinander in Eingriff stehenden Fasern außen auf einem flexiblen, im wesentlichen luftundurchlässigen Schlauch aus dem Schild aufgebracht wird und daß der Schlauch fortschreitend durch Einblasen von Luft gegen die Innenwand des Kanals oder dgl. gedrückt wird, wobei gleichzeitig aus den Austrittsöffnungen die sich in einem plastisch verformbaren Zustand befindliche Masse zwischen Innenwand und Faserschicht in diese eingepreßt wird. Dadurch ergibt sich der Vorteil, daß auch Innenwände von Kanälen und dgl. sehr einfach mit einer Schicht aus einer erhärtenden Masse versehen werden können, wobei auf eine Befestigung der Faserschicht mit Befestigungselementen an der Wand des Kanales oder dgl. verzichtet werden kann. Dabei ist durch das Eindringen der Masse zwischen zu beschichtender Wand und Faserschicht sichergestellt, daß die Faserschicht vollständig durchtränkt wird.

Gemäß einer weiteren bevorzugten Ausführungsform wird so vorgegangen, daß der Schlauch samt der aufgebrachten Faserschicht vor seinem Einbringen in einen auszukleidenden Kanal oder dgl. in im wesentlichen in Längsrichtung verlaufende Falten gelegt und von einem Packschlauch umhüllt wird, der in den auszukleidenden Kanal oder dgl. eingebracht unmittelbar vor dem Einblasen von Luft in den an seiner Außenseite die Faserschicht tragenden Schlauch in Längsrichtung abgezogen wird. Dadurch kann der im Packschlauch befindliche, die Faserschicht tragende Schlauch beim Einbringen in einen zu beschichtenden Kanal sehr einfach gehandhabt werden. Außerdem ist es dadurch auch möglich, den die Faserschichte tragenden Schlauch nur über eine kleine Wegstrecke aufzublasen, die mit dem Arbeitsfortschritt weiterwandert, wodurch mit einer relativ kleinen und leistungsschwachen Druckluftquelle das Auslangen gefunden werden kann.

Durch das Einbringen des die Faserschicht tragenden Schlauches in einen Packschlauch ergibt sich auch der Vorteil, daß die Faserschicht nicht mit dem Schlauch verbunden werden muß. Es genügt, wenn die Faserschicht auf der Außenseite des Schlauches lediglich aufliegt. Ein Verrutschen der Faserschicht ist aufgrund der Faltung des Schlauches nach dem Aufbringen der Faserschicht und der Fixierung der Faltung durch das Einbringen in den Packschlauch nicht zu befürchten, wobei sich durch das Aufblasen des Schlauches unmittelbar nach dem Schlitzen und Abziehen des Packschlauches eine Fixierung aufgrund der Reibung der Faserschicht an der Wand des auszukleidenden Kanales ergibt.

Dabei ergibt sich durch das Fehlen einer dichten Verbindung der Faserschicht mit dem Schlauch auch der Vorteil, daß die Faserschicht von der relativ dünnflüssigen, erhärtenden Masse unterspült werden kann und sich daher eine glatte und dichte Oberfläche ergibt.

Um auch bei der Auskleidung von Kanälen, deren Querschnitte eine relativ große vertikale Erstreckung aufweisen, eine gleichmäßige Durchtränkung der Faserschicht sicherstellen zu können, ist es vorteilhaft, daß die sich in einem plastisch verformbaren Zustand, vorzugsweise flüssige, erhärtende Masse, zumindest bei Querschnitten mit größerer vertikaler Erstreckung, in einzelnen Portionen aufeinanderfolgend über den Umfang des Querschnittes verteilt in die Faserschicht eingebracht wird. Dadurch wird eine durch hydrostatische Druckunterschiede bedingte, ungleichmäßige Verteilung der eingebrachten Masse sicher vermieden.

Die Erfindung wird nun anhand der Zeichnung näher erläutert. Dabei zeigen:
Fig. 1 schematisch eine erfindungsgemäße Einrichtung zur Durchführung des erfindungsgemäßen Verfahrens,
Fig. 2 ein Rohr zum Einbringen einer plastischen, erhärtenden Masse,
Fig. 3 einen Schnitt entlang der Linie III-III in der Fig. 2,
Fig. 4 einen Schnitt entlang der Linie IV-IV in der Fig. 2; und
Fig. 5 einen Schnitt durch eine Verteileinrichtung für die erhärtende Masse.

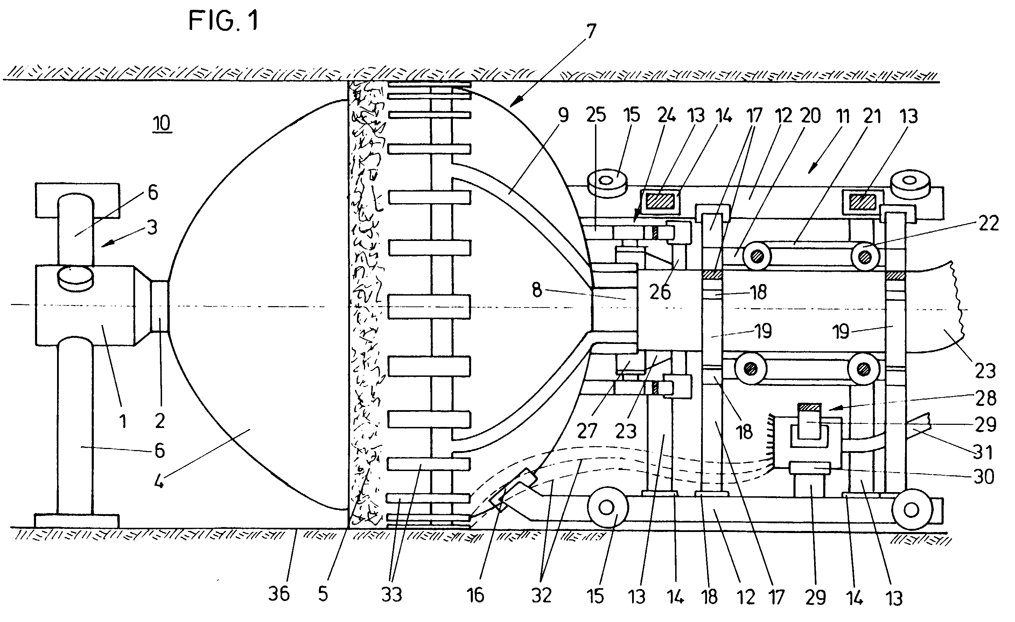

Eine Einrichtung weist, wie aus der Fig. 1 zu ersehen ist, ein Gebläse 1 auf, das mit einer Aufnahme 2 für einen Schlauch 4 und mit einer Stützeinrichtung 3 versehen ist. Dabei ist der Schlauch 4 an seiner Außenseite mit einer Schicht 5 aus miteinander in Eingriff stehenden Fasern, vorzugsweise einem Nadelfilz, versehen.

Die Stützeinrichtung 3 weist beim dargestellten Ausführungsbeispiel drei um 120° versetzt angeordnete, teleskopartig ausfahrbare Stützfüße 6 auf.

Weiters weist die Einrichtung ein Schild 7 auf, das mit einer zentralen Bohrung zur Aufnahme des Schlauches 4 samt Faserschicht 5 dient. Die zentrale Öffnung ist von einem Rohransatz 8 umgeben, der zur besseren Führung des Schlauches 4 dient.

Wie aus der Fig. 1 weiters zu ersehen ist, ist das Schild 7 geteilt ausgeführt, wobei die Ränder der vier Teile mit Flanschen 9 versehen sind, die aneinander anliegen und mittels nicht dargestellter Schnellverschlüsse miteinander verbunden sind.

Das Schild 7, das im wesentlichen dem Querschnitt eines auszukleidenden Hohlraumes, z.B. eines Kanals 10, entspricht, ist mit einem Fahrgestell 11 verbunden. Dabei erfolgt die Verbindung des Fahrgestelles 11 mit dem Schild 7 über an Längsholmen 12 stirnseitig befestigten Anschlußplatten 16 und diese durchsetzende, lösbare Befestigungsmittel, wie z.B. Schrauben oder Schnellverschlüsse. Die drei beim dargestellten Ausführungsbeispiel verwendeten Längsholme 12 sind über Querstreben 13 miteinander verbunden, wobei die gegebenenfalls teleskopartig in ihrer Länge veränderbaren Querstreben 13 an ihren Enden mit Anschlußplatten 14 versehen sind, um eine leicht lösbare Verbindung mit den Längsholmen 12 zu vermöglichen.

Die Längsholme 12 sind mit Rädern 15 versehen, die sich an der auszukleidenden Innenwand des Kanals 10 abstützen.

Im Fahrgestell 11 sind über weitere Streben 17, die ebenfalls mit Anschlußplatten 18 versehen sind, zwei Ringe 19 gehalten, die vom in den auszukleidenden Kanal 10 eingelegten Schlauch 4 durchsetzt sind, wobei dieser Schlauch 4 samt seiner Faserschicht 4 in einem Packschlauch 23 gehalten ist.

Die beiden Ringe 19 sind über Paare von Wangen 20 miteinander verbunden, wobei in den Paaren von Wangen 20 umlaufende Bänder 21 tragende, antreibbare Rollen 22 gelagert sind. Diese Rollen 22 bzw. Bänder 21 liegen mit Pressung an dem Packschlauch 23 an, sodaß auf diesen eine Vortriebskraft übertragen werden kann.

An dem Schild 7 ist weiters noch eine Schneideinrichtung 24 über Streben 25 gehalten, die im wesentlichen zwei Dreiecke bilden. An diesen Streben 25 sind zwei Messer 26 gehalten, die zum Schlitzen des Packschlauches 23 in dessen Längsrichtung dienen, sodaß dieser in zwei Streifen geteilt wird. Diese beiden Streifen sind auf zwei antreibbare Wickelwalzen 27 aufwickelbar. Dadurch ist sichergestellt, daß der mit der Faserschicht 5 versehene Schlauch 4 dicht gepackt durch die zentrale Öffnung des Schildes 7 hindurchgeführt werden kann.

Weiters ist im Fahrgestell eine Verteileinrichtung 28 über mit Anschlußplatten 30 versehene Streben 29 gehalten, die über einen Schlauch 31 mit einer nicht dargestellten Zubereitungseinrichtung für die erforderliche erhärtende Masse verbunden ist.

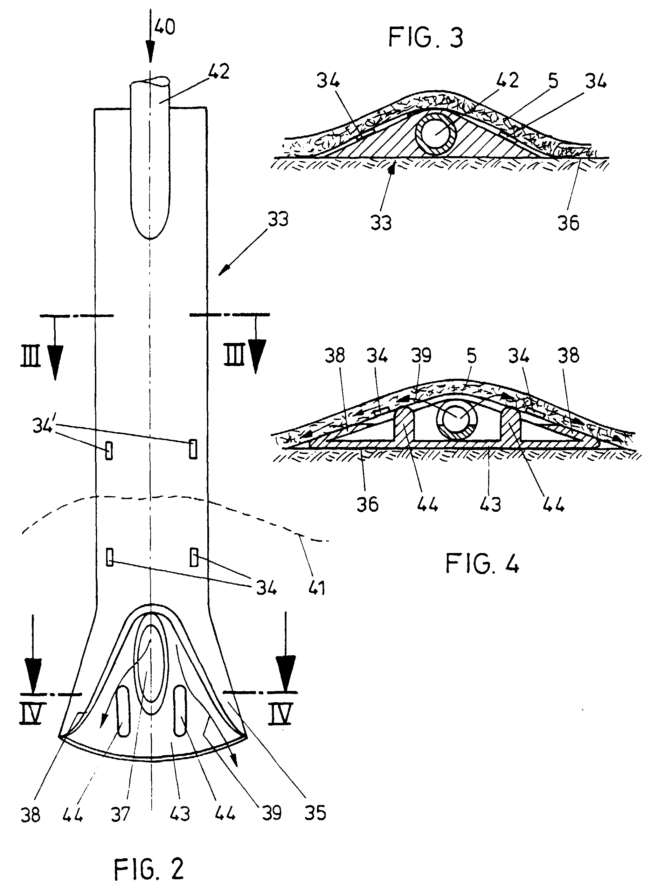

Diese Verteileinrichtung 28 ist weiters über nur strichliert angedeutete Zuführschläuche 32 mit über den Umfang des Schildes 7 gleichmäßig verteilt angeordneten Rohren 33 verbunden, die in den Fig. 2 bis 4 näher dargestellt sind.

Um einen Hohlraum, z.B. einen Kanal 10, bzw. dessen Wand auszukleiden, wird ein in dem Packschlauch 23 gehaltener Schlauch 4, der an seiner Außenseite eine Faserschicht 5 trägt, in den Kanal eingelegt. Weiters wird die Einrichtung in zerlegtem Zustand über eine relativ kleine Zutrittsöffnung in den Kanal 10 eingebracht und dort zusammengebaut. Anschließend wird der Packschlauch 23 durch die beiden Ringe 19 hindurchgeführt und an seinem vorderen Ende aufgeschlitzt und die so entstehenden Streifen an den beiden Wickelwalzen 27 befestigt.

Weiters wurde der Schlauch 4 samt Faserschicht 5 im dicht gepackten Zustand durch die zentrale Öffnung des Schildes 7 hindurchgeführt und der Schlauch 4 an der Aufnahme 2 des Gebläses 1 befestigt, das an der Wand des Kanals ortsfest gehalten bzw. an dieser unverrückbar abgestützt ist.

Durch Inbetriebnahme des Gebläses 1 wird der Schlauch 4 aufgeblasen, sodaß sich dieser bzw. dessen Faserschicht 5 an die auszukleidende Wand des Kanals 10 anlegt, wobei jedoch die Rohre 33 zwischen die Faserschicht 5 und die Wand des Kanals 10 greifen.

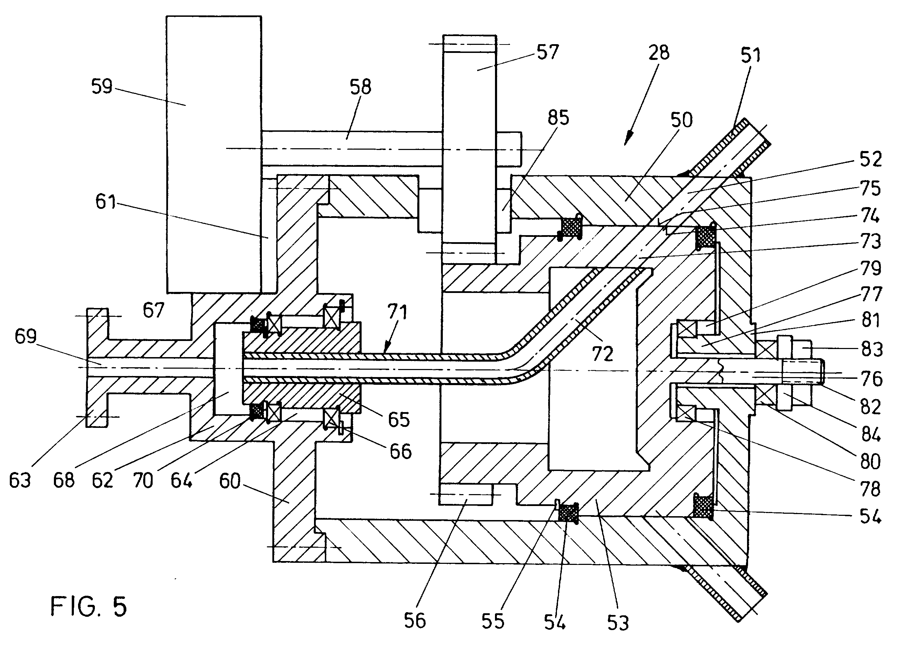

Über die Verteileinrichtung 28, deren Aufbau anhand der Fig. 5 noch näher erläutert werden wird, werden die einzelnen, über den Umfang des Schildes 7 gleichmäßig verteilt angeordneten Rohre 33, die in den Fig. 2 bis 4 näher dargestellt sind, aufeinanderfolgend mit im wesentlichen gleichen Portionen erhärtender Masse versorgt, die im wesentlichen in Richtung zur Faserschicht 5 hin aus den Rohren 33 austritt und diese durchtränkt. Durch die aus den Rohren 33 austretende, erhärtende Masse kommt es auch zu einer Zentrierung und Führung des Schildes 7 und damit des beweglichen Teiles der Einrichtung.

Da die Faserschicht 5 mit dem Schlauch 4 zumindest nicht durchgehend mit diesem verbunden ist, bildet sich zwischen der Faserschicht und der Außenseite des Schlauches 4 eine dünne Schicht aus der erhärtenden Masse aus, in der sich nahezu keine Fasern befinden, sodaß sich eine sehr glatte Oberfläche im ausgekleideten Bereich des Kanals 10 ergibt.

Das Schild 7 samt Fahrgestell 11 wird im Zuge des Arbeitsfortschrittes vom Gebläse 1 weg bewegt. Die dafür erforderliche Kraft wird im wesentlichen durch den im Inneren des Schlauches 4 herrschenden Überdruck aufgebracht, der auf das Schild 7 wirkt. Je nach dem im Inneren des Schlauches 4 herrschenden Druck, der sich im wesentlichen nach dem Erfordernis der sicheren Anlage der Faserschicht an der Innenwand des Kanals 10 richtet, wird zur Erzielung der erforderlichen Vorschubgeschwindigkeit, die danach bestimmt wird, daß eine sichere Durchtränkung der Faserschicht 5 gewährleistet ist, durch Ausübung einer Vortriebs- oder Bremskraft auf den noch geschlossenen Packschlauch 23 mittels der antreibbaren, umlaufenden Bänder 21 ausgeübt, deren nicht dargestellte Antriebe mit einer ebenfalls nicht dargestellten Steuerung verbunden sind.

Diese Steuerung ist mit an der dem Inneren des Kanals 10 bzw. der Faserschicht 5 zugekehrten Seite der, wie aus den Fig. 3 und 4 ersichtlich ist, im wesentlichen dreieckigen Rohre 33 angeordneten, auf die erhärtende Masse ansprechenden Sensoren 34, 34' verbunden. Bei diesen Sensoren kann es sich um einfache Kontaktplättchen handeln, die mit einer Widerstandsmeßeinrichtung verbunden sind. Befindet sich erhärtende Masse zwischen den Kontaktplättchen 34, so ändert sich der elektrische Widerstand zwischen diesen, der über die Widerstandmeßeinrichtung leicht erfaßt werden kann.

Werden nun die den Sensor 34 bildenden Kontakte nicht benetzt, so ist dies ein Zeichen, daß die Vorschubgeschwindigkeit zu groß gewählt ist und eine vollständige Durchtränkung der Faserschicht 5 nicht gewährleistet ist.

Wie aus der Fig. 2 zu ersehen ist, weisen die Rohre 33 an ihrem ausströmseitigen Ende eine Verbreiterung 35 auf, in deren Bereich die Rohre 33 schräg abgeschnitten sind, wobei diese Schnitte in Längsrichtung der Rohre 33 von deren dem Inneren des Hohlraumes 10 zugekehrten Mantellinien weg schräg nach außen zur Wand 36 des Kanals 10 hin geführt sind und im Bereich der der Wand 36 des Kanals 10 zugekehrten Mantellinien enden, sodaß die Ausströmöffnung 37 eines jeden Rohres 33 überdeckt ist. Dadurch ist sichergestellt, daß die erhärtende Masse im wesentlichen schräg gegen die Faserschicht 5 austritt und diese durchtränkt.

Im Bereich der Verbreiterung 35 sind seitliche Ränder 38 vorgesehen, die eine seitliche Ausbreitung der erhärtenden Masse unmittelbar nach deren Austritt aus einem Rohr 33 weitgehend verhindern, sodaß die erhärtende Masse die Ränder 28, wie durch die Pfeile 39 in der Fig. 4 angedeutet, nach der Durchtränkung der Faserschicht 5 umspülen und sich erst danach weiter verbreitern kann. Dabei wird durch die seitlichen Ränder 28 auch eine Verbreitung der austretenden, erhärtenden Masse entgegen der Zuströmrichtung 40 unmittelbar neben dem Rohr 33 weitgehend verhindert.

Die Ausbreitung der austretenden, erhärtenden Masse nach der Durchtränkung des entsprechenden Bereiches der Faserschicht 5 wird, wie durch die strichlierte Linie 41 angedeutet ist, durch entsprechende Steuerung der Vorschubgeschwindigkeit in einem zwischen den Sensoren 34 und 34' liegenden Bereich gehalten. Dabei wird die Vorschubgeschwindigkeit vermindert, wenn das den Sensor 34 bildende Kontaktpaar nicht mehr benetzt wird und erhöht, wenn das den Sensor 34' bildende Kontaktpaar von der erhärtenden Masse benetzt wird.

Die Zufuhr der erhärtenden Masse zur Ausströmöffnung 37 erfolgt über einen im Querschnitt kreisrunden Schlauch 42, der in dem einen im wesentlichen dreieckigen Querschnitt mit über den Umfang seines Querschnitts sich ändernder Wandstärke aufweisenden Rohren 33 eingebettet ist und mit den von der Verteileinrichtung 28 kommenden Zuführschlaufen 32 über entsprechende Kupplungen (nicht dargestellt) verbindbar ist. Aus Gründen einer gleichmäßigen Beschickung der Rohre 33 weisen die Zuführschläuche 32 alle im wesentlichen gleiche Längen auf.

Im Bereich der Verbreiterungen 35 der Rohre 33 sind an dem an der wand 36 des Kanals 10 anliegenden Abschnitt 32 in Längsrichtung der Rohre 33 verlaufende Rippen 44 angeformt, die verhindern, daß sich die Faserschicht unmittelbar an die Ausströmöffnung 37 anlegen kann.

Die Fig. 5 zeigt einen Schnitt durch eine Verteileinrichtung 28. Diese weist einen topfartig ausgebildeten Stator 50 auf, in dessen einem stirnseitigen Bereich über den Umfang gleichmäßig verteilt angeordnete Anschlüsse 51 für die Zuführschläuche 32 angeordnet sind, die zu den am äußeren Umfang des Schildes 7 angeordneten Rohren 33 führen. Dabei entspricht die Zahl dieser Anschlüsse 51 der Zahl der Rohre 33. Diese Anschlüsse 51 sind koaxial zu den Stator 50 in dessen Mantelbereich durchsetzenden Kanälen 52 ausgerichtet.

Im Stator 50 läuft ein Rotor 53 mit nur geringem Spiel um, wobei der Rotor 53 über zwei Dichtungen 54 gegen das Gehäuse abgedichtet ist, wobei die eine Dichtung 54 mittels eines Seegerringes 55 in seiner axialen Lage gesichert ist.

Weiters ist der Rotor 53 mit einem abgesetzten Ansatz versehen, der einen Zahnkranz 56 trägt. Dieser kämmt mit einem Ritzel 57, das drehfest auf einer Welle 58 eines Getriebemotors 59, der an einem an dem Stator 50 befestigten Schild 60 mittels eines Flansches 61 und diesen durchsetzenden Schrauben (nicht dargestellt) befestigt ist.

An dem Schild 60 ist ein Anschlußgehäuse 62 angeformt, das einen zentralen Anschlußflansch 63 trägt, der zum Anschluß des die erhärtende Masse zur Verteileinrichtung 28 führenden Schlauches 31 dient, der mit einer Zubereitungseinrichtung (nicht dargestellt) zur Herstellung der erhärtenden Masse verbunden ist. Dieses Anschlußgehäuse 62 weist eine Bohrung 64 auf, in der ein Drehteil 65 mittels zweier Kugellager 66, 67 gelagert ist.

Dabei bleibt zwischen der Stirnseite der Bohrung 64 und der Stirnseite des Drehteiles 65 ein Aufnahmeraum 68 frei, in den auch eine den Flansch 63 durchsetzende Bohrung 69 mündet. Dieser Aufnahmeraum 68 ist mittels einer Dichtung 70 abgedichtet.

Weiters ist in diesem Drehteil 65 ein abgebogenes Rohr 71 dicht gehalten, wobei der zweite Schenkel 72 dieses Rohres 71 an der Innenseite eines Mantelabschnittes des ebenfalls im wesentlichen topfförmig ausgebildeten Rotors 53, vorzugsweise durch eine Schweißnaht befestigt ist. Dabei ist der Schenkel 72 des Rohres 71 koaxial zu einem im Mantelabschnitt des Rotors 53 angeordneten Kanal 73 ausgerichtet, dessen statorseitige Mündung 74 in der Ebene der rotorseitigen Einlässe 75 der Kanäle 52 des Stators 50 liegt.

Wie aus der Fig. 5 zu ersehen ist, liegen die Achsen der Kanäle 52 des Stators 50 auf einer gemeinsamen, imaginären Kegelmantelfläche, wobei der Schenkel 72 des abgebogenen Rohres 71 und damit auch der Kanal 73 des Rotors 53 entlang dieser Kegelmantelfläche rotiert. Dadurch werden scharfe Umlenkungen des Stromes der erhärtenden Masse vermieden.

Der Rotor 53 wird vom Getriebemotor 59 über das Ritzel 57, das in eine Öffnung 85 des Mantelabschnittes des Stators 50 eingreift, und den Zahnkranz 56 angetrieben, wodurch die statorseitige Öffnung 74 des Kanales 73 des Rotors 53 aufeinanderfolgend an den rotorseitigen Einlässen 75 der Kanäle 52 des Stators 50 vorbeistreicht und die unter Druck stehende, erhärtende Masse in den betreffenden Kanal 52 eintreten und durch diesen hindurch und dann an diesen angeschlossenen Zuführschlauch 32 zu den am Umfang des Schildes 7 verteilt angeordneten Rohren 33 gelangen und über diese in die Faserschicht 5 eindringen kann.

Der Rotor 53 weist an seiner einen Stirnseite einen Zapfen 76 auf, der eine nach innen gerichtete Nabe 77 des Stators 50 durchsetzt. An der Außenseite dieser Nabe 78 sitzt ein in eine Bohrung 79 des Rotors 53 eingesetztes Kugellager 78.

Zur Lagesicherung des Rotors 53 ist auf dem Zapfen 76 ein Drucklager 80 angeordnet, das an der Außenseite der Stirnwand 81 des Stators 50 anliegt und mittels einer auf dem mit einem Gewinde 82 versehenen Ende des Zapfens 76 aufgeschraubten Mutter 83 und einem Zwischenring 84 einstellbar ist.

## Patentansprüche

1. Einrichtung zur Beschichtung von Innenflächen von langgestreckten Hohlräumen, wie Leitungen oder Kanälen (10), welche Einrichtung ein im wesentlichen dem Querschnitt des Hohlraumes entsprechendes Schild (7) aufweist, das mittels eines mit diesem in Verbindung stehenden Fahrgestelles (11) in Längsrichtung des Hohlraumes verfahrbar ist und das mit Zuführleitungen für eine im plastischen Zustand befindliche, erhärtende Masse in Verbindung steht, welche Zuführleitung (32) mit über den Umfang des Querschnittes des Hohlraumes im wesentlichen gleichmäßig verteilt angeordneten Austrittsöffnungen (27) versehen sind, wobei ein Gebläse (1) mit einer Aufnahme (2) für einen an den zu verkleidenden Hohlraum anpreßbaren, zur Innenseite im wesentlichen luftundurchlässigen Schlauch (4) versehen ist und eine im Hohlraum ortsfest verankerbare Stützeinrichtung (3) aufweist, dadurch gekennzeichnet, daß das Schild (7) mit einer für den Durchtritt des neben der undurchlässigen Schicht ein Fasermaterial aufweisenden Schlauches (4) vorgesehenen, zentralen Öffnung versehen ist, und die Zuführleitungen (32) mit einer am Fahrgestell (11) gehaltenen Verteileinrichtung (28) für die erhärtende Masse verbunden sind und in am äußeren Umfang des Schildes (7) angeordneten Rohren (33) enden, deren Austrittsöffnungen (27) im wesentlichen durch einen schräg zur Längsachse der Rohre (33) geführten Schnitt gebildet sind, die an den der Innenwand (36) des Hohlraumes nächsten Mantellinien der Rohre (33) enden.

2. Einrichtung nach Anspruch 1, dadurch gekennzeichnet, daß das Schild (7) mit mindestens zwei Schneideinrichtungen (24) und zwei antreibbaren Wickeleinrichtungen (27) zur Aufnahme von Streifen des Packschlauches (23) in Verbindung steht.

3. Einrichtung nach Anspruch 1 oder 2, dadurch gekennzeichnet, daß das Schild (7) bzw. dessen Fahrgestell (11) mit mindestens zwei im Bereich einer Querschnittsebene des Hohlraumes (10) angeordneten, zur Anlage an dem Schlauch (4, 23) vorgesehenen, antreibbaren Rollen oder umlaufenden Bändern (21) in Verbindung steht.

4. Einrichtung nach einem der Ansprüche 1 bis 3, dadurch gekennzeichnet, daß das Schild (7) und das Fahrgestell (11) mehrteilig ausgebildet sind und für die Verbindung der einzelnen Teile lösbare Befestigungsmittel, vorzugsweise Schnappverschlüsse, vorgesehen sind.

5. Einrichtung nach einem der Ansprüche 1 bis 4, dadurch gekennzeichnet, daß die am äußeren Umfang des Schildes (7) angeordneten Rohre (33) einen im wesentlichen dreieckigen Querschnitt aufweisen und der Bereich der je einen Ausströmöffnung (37) gegen das Innere des Hohlraumes (10) vorragende Ränder (38) aufweist, wobei in diesem Bereich vorzugsweise eine Verbreiterung (35) vorgesehen ist.

6. Einrichtung nach Anspruch 5, dadurch gekennzeichnet, daß die Rohre (33) im Bereich der Ausströmöffnung (37) an ihren der Innenwand (36) des Hohlraumes (10) im wesentlichen anliegenden Wandbereichen mit gegen das Innere des Hohlraumes (10) vorspringenden und in Längsrichtung der Rohre (33) verlaufenden Rippen (44) versehen sind.

7. Einrichtung nach Anspruch 5 oder 6, dadurch gekennzeichnet, daß in der Ausströmöffnung (37) nahen Bereichen der Rohre (33) an deren dem Inneren des Hohlraumes (10) zugekehrten Seite mindestens zwei in Längsrichtung der Rohre (33) versetzt angeordnete, an sich bekannte Sensoren (34, 34') zur Erfassung der erhärtenden Masse vorgesehen sind, die über Signalleitungen mit einer Steuerung verbunden sind, an der das Gebläse (1) und bzw. oder die Antriebe der antreibbaren Rollen oder umlaufenden Bänder (21) angeschlossen ist.

8. Einrichtung nach einem der Ansprüche 1 bis 7, dadurch gekennzeichnet, daß die mit den Zuführleitungen (32) verbundene Verteileinrichtung (28) einen antreibbaren, zylindrischen Rotor (53) aufweist, der einen an dessen äußerer Mantelfläche offenen, mit einer Zuleitung für die erhärtende Masse versehenen Kanal (73) aufweist, wobei der Rotor (53) mit nur geringem Spiel in einem diesen umgreifenden Stator (50) umläuft, der mit einer der Anzahl der Zuführleitungen (32) bzw. den Rohren (33) des Schildes (7) entsprechenden, gleichmäßig über seinen Umfang verteilt angeordneten und seine Wand durchsetzenden Kanälen (52) versehen ist, die mit den Zuführleitungen (32) verbindbar sind und an ihren dem Rotor (53) zugekehrten Einlässen (75) im Bewegungsweg der statorseitigen Öffnung (74) des Kanals (73) des Rotors (53) liegen.

9. Einrichtung nach Anspruch 8, dadurch gekennzeichnet, daß die Achse des Kanals (73) im Rotor (53) und die Achsen der Kanäle (52) im Stator (50) auf einer gemeinsamen, imaginären Kegelmantelfläche liegen.

10. Einrichtung nach Anspruch 8 oder 9, dadurch gekennzeichnet, daß der im Rotor (53) angeordnete Kanal (73) an seiner der Drehachse zugekehrten Innenwand mit einem abgebogenen Rohr (71) verbunden ist, dessen einer Schenkel koaxial zur Drehachse des Rotors (53) in einem Anschlußgehäuse (62) gelagert ist, an das ein die erhärtende Masse führender Schlauch (31) axial angeschlossen ist.

11. Einrichtung nach einem der Ansprüche 8 bis 10, dadurch gekennzeichnet, daß alle Zuführleitungen (32) zwischen der Verteileinrichtung (28) und den am äußeren Rand des Schildes (7) angeordneten Rohren (33) gleiche Länge aufweisen.

12. Verfahren zur Aufbringung einer Beschichtung aus einer mit Fasern verstärkten, aushärtenden, ein Bindemittel aufweisenden Masse auf einem Untergrund, insbesondere der Innenwand eines Kanals (10) oder dgl, unter Verwendung einer Einrichtung nach einem der Ansprüche 1 bis 10, dadurch gekennzeichnet, daß durch das verfahrbare Schild (7) auf den Untergrund (10) eine Schicht (5) aus miteinander in Eingriff stehenden, vorzugweise einen Nadelfilz bildenden, Fasern aufgebracht und diese Schicht (5) mit der sich in einem plastisch verformbaren Zustand befindlichen Masse durchtränkt wird, welche über den Umfang des zu beschichtenden Untergrundes verteilt über Austrittsöffnungen (27) ausgebracht wird, wonach die Masse aushärten gelassen wird.

13. Verfahren nach Anspruch 12, dadurch gekennzeichnet, daß die Schicht (5) aus miteinander in Eingriff stehenden Fasern außen auf einem flexiblen, im wesentlichen luftundurchlässigen Schlauch (4) aus dem Schild (7) aufgebracht wird und daß der Schlauch (4) fortschreitend durch Einblasen von Luft gegen die Innenwand des Kanals (10) oder dgl. gedrückt wird, wobei gleichzeitig aus den Austrittsöffnungen (27) die sich in einem plastisch verformbaren Zustand befindliche Masse zwischen Innenwand und Faserschicht (5) in diese eingepreßt wird.

14. Verfahren nach Anspruch 13, dadurch gekennzeichnet, daß der Schlauch (4) samt der aufgebrachten Faserschicht (5) vor seinem Einbringen in einen auszukleidenden Kanal (10) oder dgl. in im wesentlichen in Längsrichtung verlaufende Falten gelegt und von einem Packschlauch umhüllt wird, der in den auszukleidenden Kanal (10) oder dgl. eingebracht unmittelbar vor dem Einblasen von Luft in den an seiner Außenseite die Faserschicht (5) tragenden Schlauch in Längsrichtung abgezogen wird.

15. Verfahren nach einem der Ansprüche 12, 13 oder 14, dadurch gekennzeichnet, daß die sich in einem plastisch verformbaren Zustand, vorzugsweise flüssige, erhärtende Masse, zumindest bei Querschnitten mit größerer vertikaler Erstreckung, in einzelnen Portionen aufeinanderfolgend über den Umfang des Querschnittes verteilt aus den Austrittsöffnungen (27) in die Faserschicht (5) eingebracht wird.

## Claims

1. Device for coating the internal surfaces of elongate hollow spaces, such as ducts or channels (10), which device comprises a shield (7) substantially corresponding to the cross section of the hollow space and capable of being displaced in the longitudinal direction of the hollow space by means of a bogie (11) connected therewith, which shield is connected with supply ducts for a curable mass being in the plastic state, which supply ducts (32) are provided with outlet openings (27) substantially uniformly distributed about the periphery of the cross section of the hollow space, wherein a blower (1) is provided with a seat (2) for a flexible tube (4) capable of being pressed at the hollow space to be coated and substantially air-tight relative to the inner side and comprises a supporting means (3) capable of being stationarily anchored within the hollow space, characterized in that the shield (7) is provided with a central opening intended for the passage of the flexible tube (4) containing a fiber material in addition to the impermeable layer and the supply ducts (32) are connected with a distributing means (28) for the curable mass carried by the bogie (11) and terminate in pipes (33) arranged about the external periphery of the shield (7), the outlet openings (27) of which pipes substantially are formed by a cut led obliquely to the longitudinal axis of the pipes (33), terminating on the pipe (33) enveloping lines next to the internal wall (36) of the hollow space.

2. Device according to claim 1, characterized in that the shield (7) is connected with at least two cutting means (24) and two coiling means (27) capable of being driven to receive strips of the packing tube (23).

3. Device according to claim 1 or 2, characterized in that the shield (7) and its bogie (11), respectively, is in connection with at least two drivable rollers or circulating belts (21) arranged in the region of a cross sectional plane of the hollow space (10) and provided for application at the flexible tube (4, 23).

4. Device according to any of the claims 1 to 3, characterized in that the shield (7) and the bogie (11) are designed in several parts and detachable fastening means, preferably snaps, are provided for connecting the individual parts.

5. Device according to any of the claims 1 to 4, characterized in that the pipes (33) arranged about the external periphery of the shield (7) have substantially triangular cross sections and the region of each respective outlet opening (37) includes rims (38) projecting towards the interior of the hollow space (10) with an enlargement (35) preferably being provided in this region.

6. Device according to claim 5, characterized in that the pipes (33), in the region of their outflow openings (37), on their wall regions substantially lying at the internal wall (36) of the hollow space (10) are provided with ribs (44) projecting towards the interior of the hollow space (10) and extending in the longitudinal direction of the pipes (33).

7. Device according to claim 5 or 6, characterized in that at least two sensors (34, 34') known *per se* and arranged in an offset manner in the longitudinal direction of the pipes (33) are provided in regions of the pipes (33) close to the outflow openings (37) on their sides facing the interior of the hollow space (10) for detecting the curable mass, which sensors via signal lines are connected with a control circuit to which the blower (1) and/or the actuating means of the drivable rollers or circulating belts (21) is/are connected.

8. Device according to any of the claims 1 to 7, characterized in that the distributing means (28) connected with the supply ducts (32) comprises an actuatable cylindrical rotor (53) including a channel (73) open on its outer surface area and provided with a feed duct for the curable mass, characterized in that the rotor (53) rotates with but a slight play within a stator (50) encompassing the same and provided with channels (52) uniformly distributed about its circumference and passing through its wall, the number of which channels corresponds to the number of supply ducts (32) and pipes (33) of the shield (7), respectively, and which channels are connectable with the supply ducts (32) and, on their inlets (75) facing the rotor (53), are located in the moving path of the stator-side opening of the channel (73) of the rotor (53).

9. Device according to claim 8, characterized in that the axis of the channel (73) in the rotor (53) and the axes of the channels (52) in the stator (50) lie on a common imaginary surface area of a cone.

10. Device according to claim 8 or 9, characterized in that the channel (73) arranged in the rotor (53) on its internal wall facing the axis of rotation is connected with a bent pipe (71), one leg of which is mounted coaxial with the axis of rotation of the rotor (53) in a supply casing (62) to which a flexible tube (31) carrying the curable mass is axially connected.

11. Device according to claim 8 to 10, characterized in that all of the supply ducts (32) have equal lengths between the distributing means (28) and the pipes (33) arranged on the outer edge of the shield (7).

12. Process for applying a coating of a fiber-reinforced curable mass including a binder onto a substrate, in particular, the internal wall of a channel (10) or the like, using a device according to claim 1, characterized in that, by means of the displaceable shield (7), a layer (5) of mutually engaging fibers, preferably forming a needle felt, is applied onto the substrate (10) and this layer (5) is soaked with the mass being in a plastically deformable state and applied through outlet openings (27) in a manner distributed about the periphery of the substrate to be coated, whereupon the mass is allowed to cure.

13. Process according to claim 12, characterized in that the layer (5) of mutually engaging fibers is applied externally on a substantially air-tight flexible tube (4) from the shield (7) and the flexible tube (4) is progressively pressed at the internal wall of the channel (10) or the like by blowing in air while simultaneously pressing the mass being in a plastically deformable state out of the outlet openings (27) between the internal wall and the fiber layer (5) into the latter.

14. Process according to claim 13, characterized in that the flexible tube (4), prior to being introduced into a channel (10) to be coated or the like, together with the fiber layer (5) applied is arranged in folds extending substantially in the longitudinal direction and is sheathed by a packing tube, which, introduced into the channel (10) to be coated or the like, is drawn off in the longitudinal direction immediately before blowing air into the flexible tube externally carrying the fiber layer (5).

15. Process according to any of the claims 12, 13 or 14, characterized in that the preferably liquid curable mass being in a plastically deformable state is introduced into the fiber layer (5) from the outlet openings (27) in individual portions consecutively distributed over the periphery of said cross section, at least with cross sections having major vertical extensions.

## Revendications

1. Dispositif de revêtement de surfaces intérieures de cavités allongées telles que conduites ou égouts (10), lequel dispositif présente un bouclier (7) correspondant sensiblement à la section de la cavité qui peut être déplacé dans la direction longitudinale de la cavité au moyen d'un train de roulement (11) joint à lui et est joint à des conduites d'amenée d'une matière durcissante se trouvant à l'état plastique, lesquelles conduites d'amenée (32) sont pourvues d'orifices de sortie (27) sensiblement également répartis sur le pourtour de la section de la cavité, un ventilateur (1) étant pourvu d'un récepteur (2) pour une gaine (4) pratiquement imperméable à l'air vers le côté intérieur et pouvant être pressée contre la cavité à revêtir, et présentant un dispositif support (3) ancrable à un endroit fixe dans la cavité, caractérisé par le fait que le bouclier (7) est pourvu d'une ouverture centrale prévue pour le passage de la gaine (4), qui présente une matière fibreuse près de la couche imperméable, et les conduites d'amenée (32) sont jointes à un dispositif répartiteur (28) pour la matière durcissante monté sur le train de roulement (11) et se terminent dans des tuyaux (33) placés sur le pourtour extérieur du bouclier (7) dont les orifices de sortie (27) sont formés sensiblement par une coupe oblique par rapport à l'axe longitudinal des tuyaux (33) et se terminent sur les génératrices des tuyaux (33) les plus proches de la paroi intérieure (36) de la cavité.

2. Dispositif selon la revendication 1, caractérisé par le fait que le bouclier (7) est joint à au moins deux dispositifs de coupe (24) et deux dispositifs d'enroulement entraînables (27) destinés à recevoir des bandes de gaine d'emballage (23).

3. Dispositif selon l'une des revendications 1 et 2, caractérisé par le fait que le bouclier (7) ou son train de roulement (11) est en liaison avec au moins deux rouleaux entraînables ou bandes tournantes (21) placés dans la zone d'un plan de section transversale de la cavité (10) et prévus pour s'appuyer contre la gaine (4, 23).

4. Dispositif selon l'une des revendications 1 à 3, caractérisé par le fait que le bouclier (7) et le train de roulement (11) sont faits de plusieurs parties, et pour l'assemblage des différentes parties sont prévus des moyens de fixation démontables, de préférence des joints à encliquetage.

5. Dispositif selon l'une des revendications 1 à 4, caractérisé par le fait que les tuyaux (33) placés sur le pourtour extérieur du bouclier (7) sont de section sensiblement triangulaire, et la zone de chaque orifice de sortie (37) présente des bords (38) saillant vers l'intérieur de la cavité (10), dans cette zone étant de préférence prévu un élargissement (35).

6. Dispositif selon la revendication 5, caractérisé par le fait que les tuyaux (33) sont, dans la zone de l'orifice de sortie (37), sur leurs parties de paroi qui sensiblement s'appuient contre la paroi intérieure (36) de la cavité (10), pourvus de nervures (44) qui font saillie vers l'intérieur de la cavité (10) et s'étendent dans la direction longitudinale des tuyaux (33).

7. Dispositif selon l'une des revendications 5 et 6, caractérisé par le fait que dans des zones des tuyaux (33) voisines de l'orifice de sortie (37), sur le côté de ceux-ci dirigé vers l'intérieur de la cavité (10) sont prévus au moins deux capteurs connus en soi (34, 34') décalés dans la direction longitudinale des tuyaux (33) et destinés à détecter la matière durcissante qui sont reliés par des lignes de signaux à une commande à laquelle sont reliés le ventilateur (1) et/ou les dispositifs d'entraînement des rouleaux entraînables ou des bandes tournantes (21).

8. Dispositif selon l'une des revendications 1 à 7, caractérisé par le fait que le dispositif répartiteur (28) joint aux conduites d'amenée (32) présente un rotor cylindrique entraînable (53) qui présente un canal (73) ouvert sur la surface latérale extérieure de celui-ci et pourvu d'une conduite d'amenée de la matière durcissante, ce rotor (53) tournant avec seulement un faible jeu dans un stator (50) l'entourant qui est pourvu de canaux (52) en nombre correspondant au nombre des conduites d'amenée (32) ou des tuyaux (33) du bouclier (7), également répartis sur son pourtour et traversant sa paroi qui peuvent être mis en communication avec les conduites d'amenée (32) et sont, à leurs entrées (75) dirigées vers le rotor (53), sur la trajectoire de l'orifice côté stator (74) du canal (73) du rotor (53).

9. Dispositif selon la revendication 8, caractérisé par le fait que l'axe du canal (73) du rotor (53) et les axes des canaux (52) du stator (50) sont sur une surface latérale imaginaire de cône commune.

10. Dispositif selon l'une des revendications 8 et 9, caractérisé par le fait que le canal (73) situé dans le rotor (53) est joint sur sa paroi intérieure dirigée vers l'axe de rotation à un tuyau coudé (71) dont une branche est montée coaxialement au rotor (53) dans une boîte de jonction (62) à laquelle est joint axialement un tuyau souple (31) qui conduit la matière durcissante.

11. Dispositif selon l'une des revendications 8 à 10, caractérisé par le fait que toutes les conduites d'amenée (32) entre le dispositif répartiteur (28) et les tuyaux (33) placés sur le bord extérieur du bouclier (7) ont la même longueur.

12. Procédé d'application d'un revêtement d'une matière durcissante présentant un liant et renforcée par des fibres sur un substrat, en particulier sur la paroi intérieure d'un égout (10) ou d'une cavité semblable, au moyen d'un dispositif selon l'une des revendications 1 à 10, caractérisé par le fait que le bouclier mobile (7) applique sur le substrat (10) une couche (5) de fibres en prise entre elles, de préférence formant un feutre aiguilleté, et imprègne cette couche (5) de la matière se trouvant dans un état déformable plastiquement, qui est émise par des orifices de sortie (27) en étant répartie sur le pourtour du substrat à revêtir, après quoi on laisse la matière durcir.

13. Procédé selon la revendication 12, caractérisé par le fait que la couche (5) de fibres en prise entre elles est appliquée extérieurement sur une gaine souple pratiquement imperméable à l'air (4) sortant du bouclier (7), et que la gaine (4) est pressée progressivement contre la paroi intérieure de l'égout (10) ou de la cavité semblable par insufflation d'air, et en même temps, des orifices de sortie (27), la matière se trouvant dans un état déformable plastiquement est, entre la paroi intérieure et la couche de fibres (5), enfoncée dans cette dernière.

14. Procédé selon la revendication 13, caractérisé par le fait que la gaine (4), avec la couche de fibres (5) appliquée, est, avant son introduction dans un égout (10) ou une cavité semblable à revêtir, mise en plis s'étendant sensiblement dans la direction longitudinale et enveloppée d'une gaine d'emballage qui, introduite dans l'égout (10) ou la cavité semblable à revêtir, est, immédiatement avant l'insufflation d'air dans la gaine portant la couche de fibres (5) sur sa face extérieure, retirée dans la direction longitudinale.

15. Procédé selon l'une des revendications 12, 13 et 14, caractérisé par le fait que la matière durcissante, de préférence fluide, dans un état déformable plastiquement, est, au moins dans le cas des sections de grande étendue verticale, introduite des orifices de sortie (27) dans la couche de fibres (5) par portions successives en étant répartie sur le pourtour de la section.
